Europäisches Patentamt

European Patent Office

Office européen des brevets

(19)

(11) Veröffentlichungsnummer: **0 353 183**
**A1**

(12) **EUROPÄISCHE PATENTANMELDUNG**

(21) Anmeldenummer: **89810441.9**

(22) Anmeldetag: **12.06.89**

(51) Int. Cl.5: **E 03 D 5/10**

(30) Priorität: **28.07.88 CH 2879/88**

(43) Veröffentlichungstag der Anmeldung:
**31.01.90 Patentblatt 90/05**

(84) Benannte Vertragsstaaten:
**AT BE CH DE FR GB IT LI NL SE**

(71) Anmelder: **Geberit AG**
**Schachenstrasse 77**
**CH-8645 Jona (CH)**

(72) Erfinder: **Etterlin, Walter**
**Oberfeld**
**CH-9425 Thal (CH)**

(74) Vertreter: **Groner, Manfred et al**
**Patentanwalts-Bureau Isler AG Walchestrasse 23**
**CH-8006 Zürich (CH)**

(54) **Radarsonde zur selbsttätigen Einzelsteuerung von Sanitärarmaturen.**

(57) Die Radarsonde ist hinter einem Urinalbecken (1) in einer Wand angebracht und unter einem Winkel (α) schräg nach oben gerichtet. Die Radarsonde weist eine Hornantenne auf, die im Feld (6) sich bewegende Personen richtungserkennend registriert. Eine Spülung des Urinalbeckens (1) wird dann ausgelöst, wenn nach einer Hin- eine Wegbewegung registriert worden ist. Eine Spülung wird auch dann ausgelöst, wenn ein neuer Benützer während der Spülzeit an das Urinalbecken herantritt.

Fig. 1

EP 0 353 183 A1

## Beschreibung

### Radarsonde zur selbsttätigen Einzelsteuerung von Sanitärarmaturen

Die Erfindung betrifft eine Radarsonde nach dem Oberbegriff des unabhängigen Patentanspruchs 1.

Radarsonden dieser Art sind zur Steuerung der Spülung von Urinalbecken bekannt. Die Radarsonde und auch das Steuergerät können vandalensicher hinter dem Urinalbecken angebracht werden. Die Spülbetätigung arbeitet berührungslos und ist somit hygienisch. Die Radarsonde detektiert jede Bewegung des Benützers, was zur Unterdrückung des Spülvorganges benutzt wird. Ist der Benützer weggetreten und werden keine Bewegungen mehr detektiert, so wird der Spülvorgang eingeleitet. Da das Ventil der Armaturen auch dann angesteuert wird, wenn eine Person zufällig an der Armatur vorbeigeht, wurde in der DE-A-30 08 025 vorgeschlagen, die Radarsonde mit zwei Empfindlichkeitsstufen zu versehen und sie automatisch durch die Armaturenbenutzung von einer Stufe geringerer Empfindlichkeit auf eine Stufe höherer Empfindlichkeit umzuschalten.

Bei dieser Radarsonde besteht jedoch die Schwierigkeit, dass bei reger Benutzung nicht gespült wird, da andauernd Bewegungen registriert werden. Bewegt sich ein Benützer während einer gewissen Zeitspanne nicht so wird hingegen zu früh gespült, was unangenehm ist und einen unnötigen Wasserverbrauch bedeutet.

Der Erfindung liegt die Aufgabe zugrunde, eine Radarsonde der genannten Art zu schaffen, welche diese Schwierigkeiten vermeidet. Die Aufgabe wird durch die Erfindung gemäss Anspruch 1 gelöst.

Die erfindungsgemässe Radarsonde ist richtungserkennend, das heisst, sie unterscheidet zwischen einer Bewegung auf die Armatur zu und einer Bewegung von dieser weg.

Bei einem Urinalbecken spricht die Radarsonde bei jedem Wegtreten an und löst sofort eine Spülung aus. Auch wenn ein Benützer sich längere Zeit nach dem Hintreten bewegungslos verhält, wird keine Spülung ausgelöst. Trotz der erheblichen Vorteile ist keine Empfindlichkeitseinstellung und eine Umschaltung der Empfindlichkeitsstufe notwendig. Bei einfacher Montage wird somit ein optimaler Spülkomfort und ein sparsamer Wasserverbrauch erreicht.

Nach einer Weiterbildung der Erfindung ist vorgesehen, dass die Radarsonde schräg nach oben gerichtet ist. Bei einem Urinalbecken werden dadurch in einfacher Weise unbeabsichtige Spülungen bei undichtem Ventil vermieden.

Nach einer weiteren bevorzugten Weiterbildung der Erfindung weist die Radarsonde eine an sich bekannte Hornantenne auf. Diese besitzt vorzugsweise einen einstellbaren Oeffnungswinkel, so dass besondere Einbausituation wie beispielsweise Urinaltrennwände und Eckanordnungen berücksichtigt werden können.

Nachfolgend wird nun ein bevorzugtes Ausführungsbeispiel der Erfindung anhand der Zeichnung näher erläutert. Es zeigen:

Fig. 1 in schematischer Darstellung einen vertikalen Schnitt durch eine hinter einem Urinalbecken angeordnete Radarsonde, und

Fig. 2 in schematischer Darstellung eine Sicht von oben auf das Urinalbecken.

Unmittelbar hinter einem Urinalbecken 1 ist in einer Wand eine Radarsonde 5 mit einer Hornantenne für Mikrowellen angebracht. Das Urinalbecken ist für solche Mikrowellen durchlässig und ist zu seiner Spülung an eine Wasserleitung 3 und eine Abflussleitung 2 angeschlossen. In der Wand befindet sich weiter eine Einheit 4 mit einem Magnetventil und einer Steuervorrichtung mit denen in Zusammenarbeit mit der Radarsonde 5 das Urinalbecken automatisch, in der Regel mit einem hier nicht gezeigten Spülkasten, gespült wird.

Die Radarsonde 5 erzeugt ein unter dem Winkel α schräg nach oben gerichtetes Feld.

Bewegungen einer Person in diesem Feld 6 erzeugen ein Echo, dem die Radarsonde die Richtung der Bewegungen entnehmen kann. Eine Bewegung zum Urinalbecken 1 hin wird somit von einer Bewegung vom Urinalbecken weg unterschieden. Rechtwinklig zur Strahlrichtung verlaufende Bewegungen weisen für die Radarsonde die Geschwindigkeit 0 auf und werden nicht registriert. Eine zufällig am Urinalbecken 1 vorbeigehende Person wird somit nicht registriert und löst auch keine Spülung aus. Tritt hingegen ein Benützer gegen die Richtung des Pfeiles 8 an das Urinalbecken 1 heran und gelangt in das Feld 6, so wird diese Bewegung registriert. Ebenfalls wird eine Bewegung in Richtung des Pfeiles 8 registriert und als "Wegtreten" erkannt. Die Spülung wird sofort dann ausgelöst, wenn nach einer Hin- eine Weg-Bewegung registriert worden ist. Eine Spülung wird auch dann ausgelöst, wenn mit einer Hin- gleichzeitig eine Weg-Bewegung registriert wird. Tritt somit ein neuer Benützer während der Spülung an das Urinalbecken heran, so wird der vorhergehende Spülzyklus wie sonst beendet. Damit kurzzeitiges Hin- und Wegtreten keine Spülung einleitet, ist eine Zeitstufe vorgesehen, die gewähleistet, dass vor Ablauf einer vorbestimmten Zeitspanne keine Spülung ausgelöst wird. Mit der Einleitung der Spülung läuft eine vorbestimmte Spülzeit an, die wie erwähnt auch beim Hintreten eines neuen Benützers nicht unterbrochen wird.

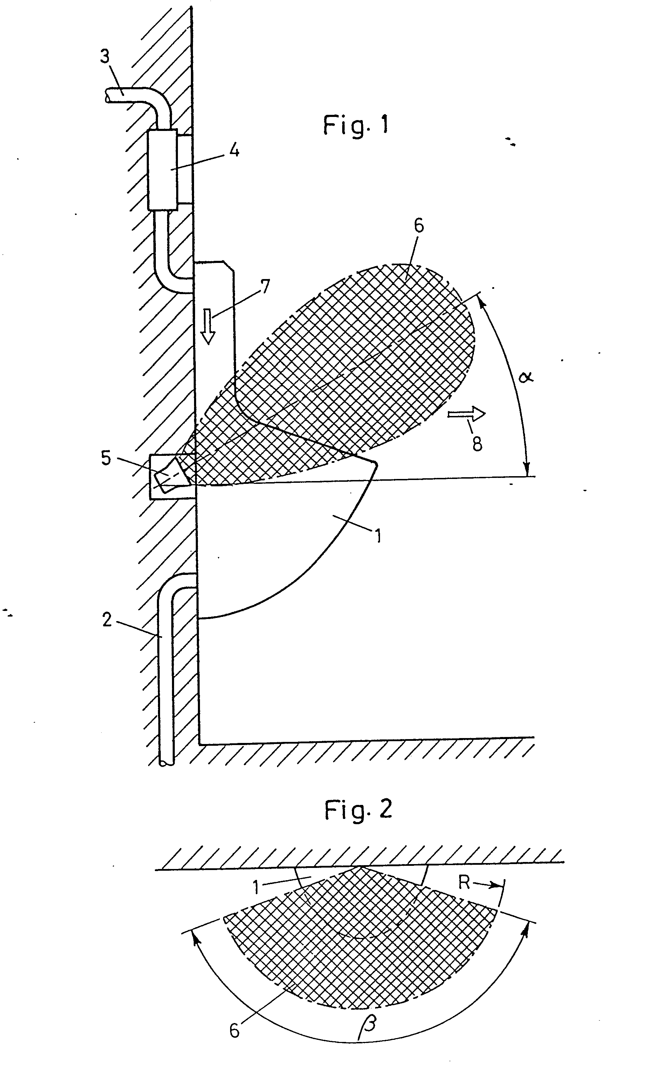

In der Sicht nach Fig. 2 ist das Feld 6 in einem Winkel β von 140° und einem Radius R von 600 mm wirksam. Dieser Oeffnungswinkel β lässt sich an der Hornantenne in Anpassung an besondere Einbauverhältnisse, beispielsweise bei einer Eckanordnung verstellen, so dass in jedem Fall das Feld optimal ausgebildet ist.

Wie die Fig. 1 zeigt, ist die Hornantenne unter einem Winkel α nach oben gerichtet. Dieser ist so gross, dass ein in Richtung des Pfeiles 7 sich nach unten bewegender Spülstrom von der Radarsonde 5 nicht erfasst wird. Bei einer Störung am Spülkasten führt dann auch ein dauernd laufender Wasserstrom nicht zur Auslösung unnötiger Spülungen.

**Patentansprüche**

1. Radarsonde zur selbsttätigen Einzelsteuerung von Santiärarmaturen, insbesondere Urinalbecken, dadurch gekennzeichnet, dass sie richtungserkennend ist und auf eine Hin-Bewegung als auch auf eine nachfolgende Weg-Bewegung anspricht.

2. Radarsonde nach Anspruch 1, dadurch gekennzeichnet, dass sie schräg nach oben gerichtet ist.

3. Radarsonde nach Anspruch 1 oder 2, dadurch gekennzeichnet, dass sie eine Hornantenne für Mikrowellen aufweist.

4. Radarsonde nach Anspruch 3, dadurch gekennzeichnet, dass die Hornantenne einen einstellbaren Oeffnungswinkel ($\beta$) aufweist.

Fig. 1

Fig. 2

Europäisches Patentamt

# EUROPÄISCHER RECHERCHENBERICHT

Nummer der Anmeldung

EP 89 81 0441

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 141 091 (C.F. PULVARI) * Figuren 3,4,6; Spalte 2, Zeilen 16-54; Spalte 5, Zeilen 38-61; Anspruch * --- | 1 | E 03 D 5/10 |
| Y,D | DE-A-3 008 025 (G. ROST & SÖHNE) * Insgesamt * --- | 1 | |
| A | DE-A-3 414 510 (GETRONIK ELEKTRONISCHE GERÄTE GmbH) * Anspruch 1; Seite 11, zeile 12 - Seite 12, Zeile 9; Figur 5 * --- | 1,3 | |
| A | DE-A-3 007 925 (B. LINDER) ----- | | |

| RECHERCHIERTE SACHGEBIETE (Int. Cl.5) |
|---|
| E 03 D E 03 C |

Der vorliegende Recherchenbericht wurde für alle Patentansprüche erstellt

| Recherchenort | Abschlußdatum der Recherche | Prüfer |
|---|---|---|
| DEN HAAG | 13-10-1989 | BIRD,C.J. |